# EUROPÄISCHE PATENTSCHRIFT

(11) **EP 0 599 437 B1**
(45) Veröffentlichungstag und Bekanntmachung des Hinweises auf die Patenterteilung: **03.07.1996**
(21) Anmeldenummer: 93250318.8
(22) Anmeldetag: 23.11.1993
(51) Int. Cl.: B64D 25/12, B64D 17/80

(54) **Luftfahrzeug mit einem Rettungssystem**
Escape system for aircraft
Avion comportant un dispositif de sauvetage

(30) Priorität: 23.11.1992 DE 4239634
(43) Veröffentlichungstag der Anmeldung: 01.06.1994
(73) Patentinhaber: STEMME GmbH & Co. KG, D-13355 Berlin (DE)
(72) Erfinder: Stemme, Reiner, Dr., D-12169 Berlin (DE)
(74) Vertreter: Christiansen, Henning, Dipl.-Ing.

(56) Entgegenhaltungen:
- DE-A- 4 208 839
- US-A- 3 499 623
- US-A- 3 622 108
- US-A- 3 796 398
- US-A- 4 033 528

## Beschreibung

Die Erfindung betrifft ein Luftfahrzeug der im Oberbegriff des Anspruchs 1 angegebenen Art. Ein solches Luftfahrzeug ist aus US-A-4 033 528 bekannt.

Aus der DE-A-28 52 220 bzw. der DE-A-30 12 789 ist es bekannt, die Landungen eines bemannten oder unbemannten Luftfahrzeugs mittels eines Bremsfallschirms zu unterstützen, wenn wegen der hohen Anfluggeschwindigkeit des Luftfahrzeugs in Verbindung mit einer relativ kurzen Landebahn ein zusätzliches Abbremsen vor oder nach dem Aufsetzen erforderlich ist.

Darüberhinaus ist es gemäß EP-A 178 467 und DE-A-20 45 966 bekannt, havarierte oder aus sonstigen Gründen unkontrollierbare Luftfahrzeuge unter Verwendung von Fallschirmen zum Boden zurückzuführen. Die dabei verwendeten Fallschirme sind dabei so vorgesehen, daß das Luftfahrzeug bei der Landung eine Position einnimmt, die einer normalen Fluglage entspricht. Dies wird im wesentlichen dadurch ermöglicht, daß der oder die Fallschirme bei der genannten Fluglage im Bereich des oder oberhalb des Schwerpunkts des Luftfahrzeugs angreifen. An dem jeweiligen Luftfahrzeuge sind dabei zum Ausbringen des Fallschirms hydraulische oder mit Raketen versehene Systeme vorgesehen, die in geeigneter Weise innerhalb des Rumpfes des Luftfahrzeugs gestaut sind.

Aus der US-A-3 622 108 ist weiterhin eine Sicherheitsvorrichtung zur Unterstützung der Notlandung fluguntüchtiger Luftfahrzeuge bekannt, bei der neben einem normalen Fallschirm ein zusätzlicher Ballon vorgesehen ist, der als sogenannter "Luftanker" im Havariefall mit Luft und/oder einem anderen erwärmten gasförmigen Medium gefüllt wird. Dadurch kann die Sinkgeschwindigkeit des havarierten Luftfahrzeugs in Abhängigkeit von der Gastemperatur verringert werden.

Die vorgenannten Lösungen für Sicherheits- und/oder Notlandesysteme für Luftfahrzeuge bedingen ein Landeverfahren, bei dem der Fallschirm das Luftfahrzeug trägt und das Aufsetzen auf dem Boden in üblicher Position erfolgt. Ein derartiges Landeverfahren weist aber den erheblichen Nachteil auf, daß beim Aufsetzen ein starker Stoß mit großen negativen Beschleunigungswerten auftritt, der von der Fahrwerksfederung des Luftfahrzeugs praktisch nicht abgefedert werden kann.

Um unter diesen Bedingungen zu vermeiden, daß Passagiere und Besatzung des Luftfahrzeugs Schaden erleiden, ist es bei derartigen Landeverfahren notwendig, zusätzliche groß dimensionierte und damit technisch aufwendige Stoßdämpfersysteme vorzusehen. Bei kleineren Luftfahrzeugen, wie beispielsweise Segelflugzeugen oder Motorseglern, würde dies zu wesentlichen konstruktiven Veränderungen und damit nicht vertretbaren Beeinträchtigungen der übrigen Flugeigenschaften führen.

Es ist zwar vielfach vorgeschlagen worden, Luftfahrzeuge mit entsprechend groß dimensionierten Fallschirmen im Notfall sicher zu Boden zu führen. Eine derartige Konzeption würde aber Fallschirmen einer Größe bedingen, welche schon aus wirtschaftlichen Gründen nicht permanent mitgeführt werden könnten, da sie entweder die Nutzlast wesentlich reduzieren oder zu einer beträchtlichen Vergrößerung der für dieselbe Nutzlast notwendigen Flugzeuggröße - und damit zur Unwirtschaftlichkeit - führen würde.

Der Erfindung liegt die Aufgabe zugrunde, ein Luftfahrzeug der eingangs genannten Gattung zu schaffen, mit dem unter Verwendung mindestens eines Fallschirms ein Rettungsvorgang auch nach Verlust der Kontrolle über das Luftfahrzeug - insbesondere aus größerer Höhe - erfolgreich durchführbar ist.

Diese Aufgabe wird mit den kennzeichnenden Merkmalen des Anspruchs 1 gelöst.

Der Erfindung schließt die Erkenntnis ein, daß auch ein relativ kleines Flugzeug in Notfall ohne Eingreifen der Besatzung sicher zu Boden gebracht werden kann, wenn nach Abremsung durch Fallschirme üblicher Größe die von einem derartigen Fallschirmsystem nicht mit wirtschaftlichen Mitteln erreichbaren Verzögerungen durch Verformung eines Teils des Flugzeugs selbst - nach Art einer "Knautschzone" - bewirkt werden.

Mit den erfindungsgemäßen Maßnahmen ist diese Verformungszone in den rückwärtigen Teil des Flugzeugs verlegt, und durch den Angriffspunkt der Fallschirme bei der Bodenannäherung die Zelle gegebenenfalls in einer räumlichen Lage stabilisiert, die das Heck abwärts richtet. Damit ist einerseits dafür Sorge getragen, daß ein relativ langer Teil der Zelle für die Verformung zur Verfügung steht. Dieser Bereich braucht - im Gegensatz zum die Kabine umfassenden Frontbereich im Normalflug keinen erhöhten Festigkeitsanforderungen zu genügen. Darüberhinaus befinden sich Personen bei der vorgenannten Lage des Luftfahrzeugs in einer relativ sicheren Position, da sie bei üblicher nach vorn gerichteter Sitzanordnung beim Aufprall in vorteilhafter Weise gegen die Rückenlehnen bzw. in die Sitze gepreßt werden.

Insbesondere bei Luftfahrzeugen, die von Personen ohne langdauernde und regelmäßige Flugerfahrung bedient werden, können Fehlbedienungen oder Fehleinschätzungen ohne weiteres zum Verlust der Kontrolle führen, was gewöhnlich einen Totalverlust von Personen und Fluggerät nach sich ziehen würde. Deshalb ist es bei der Erfindung von besonderem Vorteil, daß das hier beschriebene System auch noch bei Verlust jeder Handlungsfähigkeit des Flugzeugführers und seiner Passagiere eine relativ ungefährdete Bodenannäherung erlaubt.

Die vorteilhafte Lagestabilisierung des Luftfahrzeugs kann ohne wesentliche zusätzliche konstruktive Aufwendungen erreicht werden, wenn der Massenmittelpunkt des Luftfahrzeugs bei abwärtsgerichtetem Heck unterhalb des Angriffspunkts des Fallschirm-Systems gelegen ist. Je weiter diese Punkte voneinander entfernt gelegen sind, um so stabiler ist die Lage des Luftfahrzeugs. Auch unter der dem Gesichtspunkt, daß die Passagiersitze eine Sitzposition mit Blick in Flugrichtung aufweisen, ist die Anordnung des Angriffspunktes des Fallschirm-Systems im Frontbereich des Luftfahrzeuges - in Flugrichtung vor dessen Massenmittelpunkt - besonders günstig. Das Triebwerk befindet sich bei einer günstigen Weiterbildung der Erfindung im Bereich hinter der besonders ausgesteiften Passagierzelle kurz vor oder in dem verformbaren Bereich. Eine - ebenfalls verformbare - Antriebswelle überträgt die Antriebsleistung vom Triebwerk zu der am Heck angebrachten Luftschraube. Diese Maßnahme trägt ebenfalls zu einer Verlagerung des Schwerpunkts des Luftfahrzeugs zum Heck hin und damit zu einer Lagestabilisierung beim Absinken am Fallschirm bei.

Wegen der dadurch bedingten heckseitig abwärtsgerichteten Bewegung des Luftfahrzeugs im Falle eines Rettungsvorgangs in Richtung zur Erdoberfläche befinden sich die Passagiere somit in Rückenlage und sind durch Sitzfläche und Rückenlehne der Sitze beim Aufsetzen des Luftfahrzeugs auf den Boden in besonderem Maße geschützt.

Nach der Erfindung ist der Rumpf des Luftfahrzeugs in drei Bereiche gegliedert, die sich durch die mechanische Stabilität - insbesondere hinsichtlich in Richtung der Längsachse des Rumpfes wirkender Kräfte - unterscheiden. Der erste, in Flugrichtung des Luftfahrzeugs vordere Bereich, in welchem das Fallschirm-System mit seinem Befestigungspunkt vorgesehen ist und der ihm nachgeordnete, zweite Bereich mit der Kabine des Luftfahrzeugs weisen eine mechanische Steifigkeit, die wesentlich größer ist, als die entsprechende Steifigkeit des dritten Rumpfabschnittes, der sich hinter Luftfahrzeugkabine befindet und mit dem Höhen- und Seitenleitwerk des Luftfahrzeugs versehen ist.

Auf diese Weise wird in vorteilhafter Weise erreicht, daß nur der dritte Rumpfabschnitt im Falle einer Notlandung des Luftfahrzeuges beim heckseitigen Aufsetzens verformt wird und damit in vorbestimmter Weise als Knautschzone dient.

Durch eine geeignete Wahl der Größe des Fallschirms, an dem sich das Luftfahrzeug heckwärts in Richtung Erdoberfläche bewegt, kann in Relation zur Masse des Luftfahrzeugs und der Steifigkeitsverhältnisse seiner einzelnen Rumpfbereiche eine Sinkgeschwindigkeit vorgegeben werden, bei der nur der Heckbereich des Rumpfes verformt wird und die beiden übrigen Bereiche - und damit insbesondere die Kabine für Besatzung und Passagiere - formstabil bleiben.

Entsprechend einer anderen vorteilhaften Ausführungsform der Erfindung ist im ersten Bereich des Rumpfes des Luftfahrzeugs ein Fallschirm-System vorgesehen, das aus zwei einzelnen Fallschirmen besteht. Der zuerst auszubringende, kleinere Fallschirm dient als Bremsfallschirm und bringt das Luftfahrzeug bei gleichzeitiger Verringerung der Geschwindigkeit aus seiner Horizontallage über eine kurzzeitige Schräglage in eine, im wesentlichen vertikale Lage, bei der sich Bug und Kabine oberhalb des Hecks befinden.

Das zweite, als Brems- und Tragfallschirm wirkende System, wird nach Erreichen dieser Lage des Luftfahrzeuges ausgelöst. Bei einer möglichen Ausgestaltung wird der zweite Schirm durch den zunächst ausgelösten Bremsfallschirm aus dem Stauraum des Rumpfes herausgezogen. Er ist im Vergleich zum Bremsfallschirm größer ausgebildet, dient der weiteren Reduzierung der Geschwindigkeit des Luftfahrzeugs und trägt dieses mit einer im wesentlichen konstanten, vorbestimmten Sinkgeschwindigkeit zum Boden.

Das Auslösen des zweistufig ausgebildeten Fallschirmsystems kann entsprechend einer vorteilhaften Weiterbildung der Erfindung auch manuell erfolgen, wobei das Ausbringen des zweiten Brems- und Tragfallschirms dananch zeitgesteuert oder in Abhängigkeit von der erreichten Lage des Luftfahrzeugs automatisch erfolgen kann.

Zur weiteren Erhöhung der Flugsicherheit ist es günstig, wenn das Auslösen des Fallschirm-Systems zum Einleiten eines Rettungsvorgangs, von vorbestimmten Bedingungen abhängig, selbsttätig erfolgt. Als Auslösekriterien sind dabei eine Mindestgeschwindigkeit des Luftfahrzeugs oder das Ausbleiben bestimmter Betätigungshandlungen des Piloten günstig.

Nach einer anderen günstigen Weiterbildung der Erfindung sind für den, in der ersten Phase des Notlandevorgangs auszubringenden Bremsfallschirm mehrere Halteleinen mit einer Länge vorgesehen, die geringer ist, als der Abstand zwischen dem Angriffpunkt des Bremsfallschirms am ersten Rumpfbereich und dem Seitenleitwerk am dritten Bereich des Rumpfes. Dies ermöglicht auf einfache Weise eine sichere Entfaltung des Bremsfallschirms ohne Behinderung durch das Leitwerk des Luftfahrzeugs. Das störungsfreie Ausbringen des Bremsschirms ist darüberhinaus durch zusätzliche Mittel, z. B. Treibraketen, unterstützbar. Dadurch ist durch vorteilhafte Weise gewährleistet, daß der Bremsschirm so weit nach oben "geschossen" wird, daß sich der Schirm stets über und/oder hinter dem Luftfahrzeug öffnet und dasselbe sofort derart aufrichtet, daß eine Kollision der Schirmleinen mit dem Heck des Luftfahrzeugs mit Sicherheit vermieden wird.

Zur Verbesserung des Ablaufs des Rettungsvorgangs und der Sicherheit von Besatzung und Passagieren sind nach einer weiteren vorteilhaften Ausgestaltung der Erfindung zumindest einzelne Teile des Rumpfes, des Tragwerkes und/oder des Antriebs des Luftfahrzeugs absprengbar ausgebildet.

Insbesondere das Aufsprengen der Tanks durch Einleiten von Druckluft ist in diesem Zusammenhang günstig.

Entsprechend einer anderen günstigen Weiterbildung der Erfindung ist das für den Rettungsvorgang vorgesehene Fallschirmsystem beim Aufprall des Luftfahrzeugs auf den Boden abtrennbar angeordnet. Dadurch wird verhindert, daß das Luftfahrzeug nach Erreichen des Bodens nicht durch Luftströmungen von den Fallschirmen über Grund gezogen werden kann. Weiterhin ist zur Verhinderung von Triebwerks-und/oder Treibstoffbränden am Abschluß des Rettungsvorgangs in vorteilhafter Weise für das Lufftfahrzeug eine Löschanlage vorgesehen, die beim Aufprall auf den Boden automatisch ausgelöst wird. Die in der Kabine befindlichen Passagiere werden vor möglichen Verbrennungsgasen oder, durch den Löschvorgang erzeugten, gesundheitsgefährdenden gasförmigen Stoffen durch ein Belüftungssystem geschützt, das bei Aufprall des Luftfahrzeugs auf den Boden auslösbar ist und in der Kabine zur Verhinderung von Gaseinbrüchen einen Überdruck erzeugt.

Weitere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine Seitenansicht der bevorzugten Ausführungsform der Erfindung in schematischer Darstellung,
- Figur 2: eine schematisierte Seitenansicht des erfindungsgemäßen Luftfahrzeugs dargestellt zu einem Zeitpunkt nach Beginn des Rettungsvorgangs,
- Figur 3: eine schematisierte Seitenansicht des erfindungsgemäßen Luftfahrzeugs während des Rettungsvorgangs,
- Figur 4: eine Seitenansicht des erfindungsgemäßen Luftfahrzeugs in schematisierter Darstellung gegen Ende des Rettungsvorgangs sowie
- Figur 5: eine Variante des Ausführungsbeispiels in einer Darstellung gemäß Figur 3.

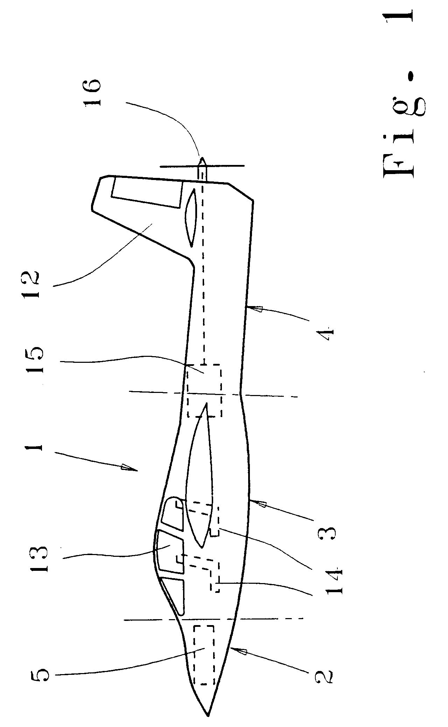

Der Rumpf des in Figur 1 in schematisierter Form in Seitenansicht dargestellten Luftfahrzeugs 1 ist funktionell in drei Bereiche 2, 3 und 4 untergliedert, welche in der Zeichung durch strichpunktierte Linien getrennt sind. Der erste, an der Spitze des Luftfahrzeugs 1 befindliche Bereich 2 enthält ein zweistufiges Fallschirm-System 5. Der Massenmittelpunkt des Luftfahrzeugs 1 befindet sich in einem zweiten, diesem Bereich nachgeordneten Bereich 3. Im Bereich 3 des Luftfahrzeugs 1, der insbesonder in Richtung seiner Längsachse eine erhöhte mechanische Steifigkeit aufweist, ist die Kabine 13 für Pilot und Passagiere vorgesehen. Der Rumpfbereich 4 trägt an seinem Ende das Höhen/Seitenleitwerk 12 und weist in Richtung seiner Längsachse eine mechanische Steifigkeit auf, die wesentlich geringer ist, als die Steifigkeit der Rumpfbereiche 2 und 3.

Zur Erhöhung der Sicherheit der Personen in der Kabine 13 ist diese als verformungssteife Zelle ausgebildet. Die in der Kabine 13 befindlichen Sitze 14 für Besatzung und Passagiere sind mit Blick in Flugrichtung angeordnet. Des weiteren ist der aus dem Triebwerk 15 und einer Luftschraube 16 bestehende Antrieb des Luftfahrzeugs 1 in Flugrichtung hinter der Kabine 13 im Rumpfbereich 4 vorgesehen. Diese konstruktiven Maßnahmen tragen während eines Rettungsvorgangs erheblich zur passiven Sicherheit der im Luftfahrzeug 1 befindlichen Personen bei. Diese Personen werden beim Auftreffen des Luftfahrzeugs auf den Boden durch ihre Sitzposition stabilisiert und können auch nicht von sich eventuell lösenden Antriebsteilen getroffen werden.

Durch den vorstehend beschriebenen Aufbau ist das Luftfahrzeug 1 für den nachfolgend zu beschreibenden Rettungsvorgang geeignet, bei dem das Luftfahrzeug 1 bei unerwartet eintretender Unkontrollierbarkeit aus seiner Flugposition heraus mit nach unten gerichtetem Heck vertikaler Ausrichtung an Fallschirmen zum Boden gelangen kann. Die unterschiedlich ausgestalteten Verformungseigenschaften der Bereiche 3 und 4 bewirken in günstiger Weise, daß beim Aufsetzen des havarierten Luftfahrzeugs 1 die kinetische Energie des Landestoßes durch Verformung des, eine verringerte Steifigkeit aufweisenden, Heckbereiches 4 des Rumpfes aufgezehrt wird. Die dem Schutz von Piloten und Besatzung dienende verformungssteife Kabine 13 wird durch den Landestoß in ihrer Gestalt nicht wesentlich verändert, so daß diese ohne aktive Handlungen als eine Art Rettungszelle sicher zu Boden geführt wird.

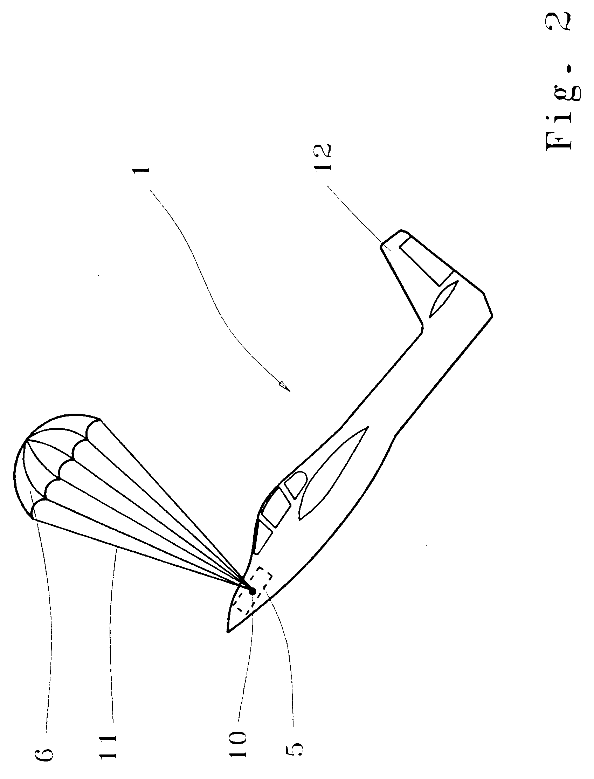

In Figur 2 ist das Luftfahrzeug 1 einer Phase kurz nach Auslösen des Rettungsvorgangs schematisch dargestellt. Der manuell oder automatisch auslösbare erste Fallschirm 6 des zweistufig ausgebildeten Fallschirm-Systems 5 dient als Bremsschirm und bringt das Luftfahrzeug 1 aus der waagerechten Fluglage nach kurzer Zeit in eine Schräglage, wobei sich der Frontbereich 2 des Luftfahrzeugs 1 oberhalb seines Heckbereichs 4 befindet.

Gleichzeitig wird die Geschwindigkeit des Luftfahrzeugs 1 durch Wirkung des Bremsschirms 6 um die Hälfte auf etwa 200 km/h verringert. Zu dem Zeitpunkt, das Luftfahrzeug 1 eine im wesentlichen vertikale Ausrichtung eingenommen hat, wird durch eine Zeit- oder Lagesteuerung der zweite, als Brems- und Tragschirm 7 ausgebildete Fallschirm ausgelöst und durch den Bremsschirm 6 aus dem Frontbereich 2 des Rumpfes herausgezogen. Um zu verhindern, daß der Bremsschirms 6 nach seinem Ausbringen durch Kontakt mit dem Höhen/Seitenleitwerk 12 in seiner Funktion beeinträchtigt wird, sind die Halteleinen 11 in ihrer Länge derart bemessen, daß sie kürzer sind als der Abstand zwischen dem Angriffpunkt 10 des Fallschirm-Systems 5 im Rumpfbereich 2 des Luftfahrzeugs 1 und dem Höhen/Seitenleitwerk 12.

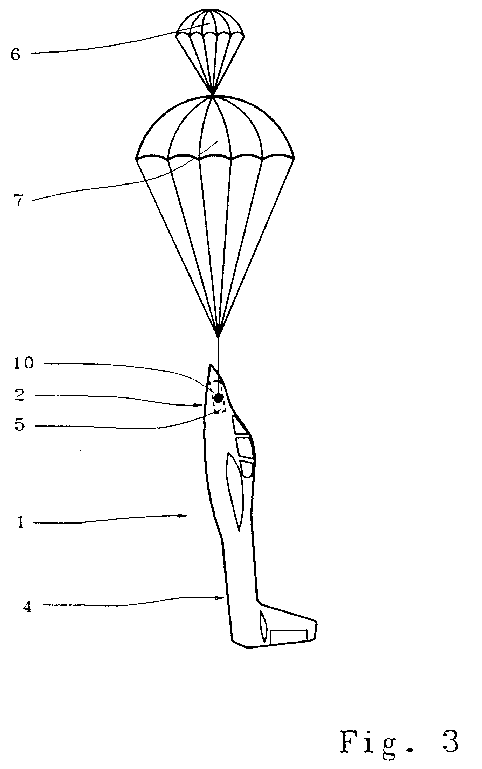

Ein sich, nach Auslösung eines Rettungsvorgangs in der Sinkphase befindliches Luftfahrzeug 1 ist in Figur 3 schematisch dargestellt. Der Brems- und Tragschirm 7 ist durch dem Bremsschirm 6 vollständig aus dem Rumpfbereich 2 herausgezogen worden und hat dabei gleichzeitig die Geschwindigkeit des Luftfahrzeugs 1 zum zweiten Mal um die Hälfte auf etwa 100 km/h verringert. Das Luftfahrzeug 1 befindet sich in vertikaler Lage, wobei der Rumpfbereich 4 in Sinkrichtung, d.h. nach unten, weist. Die Geschwindigkeitsreduzierung ist abhängig von der Größe und dem Durchmesser des Brems-und Tragschirms 7 und wird derart bemessen, daß die Geschwindigkeit des havarierten Luftfahrzeuges 1 beim heckseitigen Aufsetzen auf den Boden eine Größe aufweist, bei der nur der Heckbereich 4 des Rumpfes in einem, durch seine mechanische Steifigkeit festgelegten und der Sicherheit von Pilot und Passagieren entsprechenden Umfang deformiert wird.

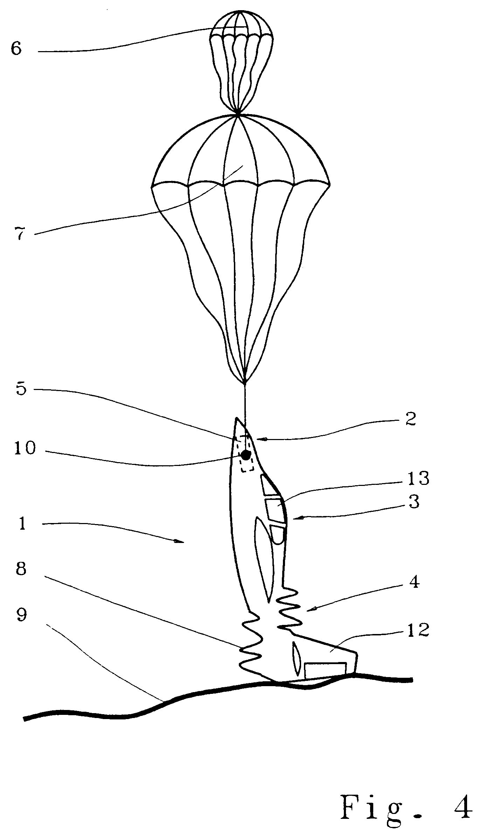

Figur 4 zeigt eine schematisierte Darstellung eines im Rettungsmanöver befindlichen, havarierten Luftfahrzeugs 1 kurz nach Auftreffen auf die Erdoberfläche 9. Die Aufprallgeschwindigkeit liegt im Bereich von 80 bis 100 km/h. Entsprechend der unterschiedlichen mechanischen Eigenschaften der Rumpfbereiche 2 und 3 bzw. 4 hat sich nur der das Höhen/Seitenleitwerk tragende Bereich 4 des senkrecht auf die Erdoberfläche auftreffenden Luftfahrzeuges 1 verformt. Die formsteife Kabine 13 bleibt im wesentlichen unverändert, wogegen die gesamte kinetische Energie durch den Aufpralls des Luftfahrzeugs 1 im Rumpfbereich 4 in Verformungsarbeit unter Ausbildung einer umfangreichen Knautschzone 8 umgesetzt wird. Die in Figur 1 schematisch dargestellte Anordnung der in Flugrichtung ausgerichteten Sitze 14 innerhalb der Kabine 13 trägt ebenfalls passiv zur Sicherheit von Pilot und Passagieren bei, da diese durch die Sitzflächen und die Rückenlehnen der Sitze bei Auftreffen des Luftfahrzeugs 1 auf den Erdboden 9 in ihrer Position stabilisiert werden.

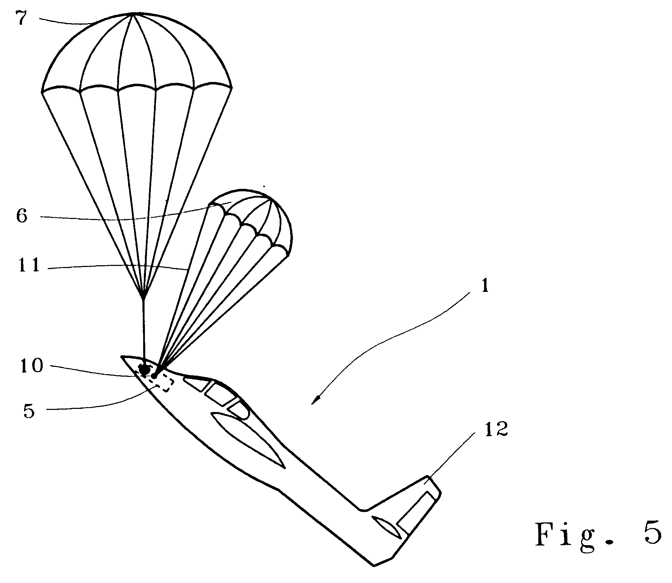

In Figur 5 ist ein Luftfahrzeug 1 mit einem Rettungssystem dargestellt, dessen Fallschirmsystem 5 mit zwei unabhängig von einander ausbringbaren Fallschirmen 6 und 7 ausgerüstet ist. Diese Art des Rettungssystems ist insbesondere unter Hinblick auf die Möglichkeit vorteilhaft, daß der Bremsfallschirm 6 nicht ordnungsgemäß ausgebracht werden konnte.

Bei dem dargestellten Luftfahrzeug sind viele Merkmale der Gesamtkonstruktion auf das erfindungsgemäße Rettungssystem abgestellt. Zusätzlich ist sind einige Parameter des Systems in Abhängigkeit von aktuellen Systemdaten variierbar, so daß eine Optimierung des Rettungsvorgangs erfolgen kann. Hierzu sind nähere Einzelheiten einer weiteren Anmeldung derselben Anmelderin zu entnehmen.

So kann das Ausbringen des Brems-und Tragfallschirms 7, gesteuert durch ein Zeitkriterium und/oder in Abhängigkeit von Daten, welche Informationen über den aktuellen Flugzustand enthalten, dann erfolgen, wenn diese Daten von vorgegebenen Sollwerten mindestens um eine vorgegebene Differenz abweichen.

Für die Massenverteilung während des Rettungsvorgangs ist es besonderns günstig, wenn das Triebwerk 15 und die Luftschraube 16 in Flugrichtung hinter den Sitzen für die Personen angeordnet sind, so daß sich diese Teile während des Rettungsvorgangs unterhalb der Passagierkabine befinden und somit beim Auftreffen auf den Boden keine Gefährdung bilden. Insbesondere, wenn eine Fernwelle zwischen Triebwerk 15 und im Heckbereich 4 angeordneter Luftschraube 16 vorgesehen ist, welche ebenfalls durch Stauchung verformbar ist, verbleibt - bei günstiger Schwerpunktlage des Triebwerks - eine genügende "Knautschzone" im Heckbereich zum Schutz der an Bord befindlichen Personen.

Wenn mindestens Teile des Rumpfes, des Antriebs oder Tragwerks auf- oder absprengbar ausgestaltet sind, kann während des Sinkvorgangs eine Massenreduzierung und eine Reduzierung der aerodynamischen Flächen zur Minderung von, den Rettungsvorgang destabilisierender Effekte erreicht werden, so daß die Sinkgeschwindigkeit - bezogen auf eine vorgegebene Fallschirmfläche - verringert ist. Auch können auf diese Weise Teile beseitigt werden, welche das Ausbringen der Fallschirme beeinträchtigen könnten, in dem sie sich in deren Leinen verheddern. Dadurch, daß die Tanks des Luftfahrzeugs 1 durch einzuleitende Druckluft aufsprengbar ausgebildet sind, kann Kraftstoff vor dem Auftreffen auf den Boden abgeleitet werden, so daß auch die Gefahr eines Aufschlagbrandes weitestgehend ausgeschlossen ist.

## Patentansprüche

1. Luftfahrzeug, insbesondere als Kleinflugzeug für Reise- oder Sportzwecke bzw. als Geschäftsreiseflugzeug, mit einem Rettungssystem, welches mittels Fallschirm die Rückkehr der Zelle mitsamt der darin befindlichen Personen zum Boden ermöglicht,
wobei ein Fallschirmsystem (5) mit mindestens einem Fallschirm (6, 7) in einem in Flugrichtung vor dem Massenmittelpunkt des Luftfahrzeugs (1) gelegenen ersten Bereich (2) des Rumpfes gestaut ist,
**dadurch gekennzeichnet**,
- daß ein die Kabine (13) zur Aufnahme der Personen enthaltender und den Massenmittelpunkt umfassender zweiter Bereich (3) des Rumpfes eine große Steifigkeit bezüglich bei Aufprall auf den Boden auftretender Verformungen aufweist,
- daß ein dritter, im rückwärtigen Teil gelegener Bereich (4) des Rumpfes derart ausgestaltet ist, daß er durch seine Verformbarkeit einen wesentlichen Teil der beim durch Fallschirm gebremsten Auftreffen der Zelle auf den Boden freiwerdenen kinetischen Energie aufnimmt und somit die Verzögerung des zweiten Bereichs (3) auf einen unschädlichen Wert herabsetzt.

2. Luftfahrzeug nach Anspruch 1, **dadurch gekennzeichnet,** daß das Fallschirm-System (5) aus einem ersten und einem zweiten Fallschirm besteht, wobei der erste Fallschirm (6) als Bremsfallschirm ausgebildet ist.

3. Luftfahrzeug nach Anspruch 2, **dadurch gekennzeichnet,** daß der zweite Fallschirm (7) des Fallschirm-Systems (5) als Brems- und Tragschirm ausgebildet ist.

4. Luftfahrzeug nach Anspruch 2, **dadurch gekennzeichnet,** daß der Bremsfallschirm (6) die Geschwindigkeit des Luftfahrzeugs (1) gegenüber der Reisegeschwindigkeit im wesentlichen um die Hälfte reduziert.

5. Luftfahrzeug nach Anspruch 3, **dadurch gekennzeichnet,** daß der Brems- und Tragfallschirm (7) die Geschwindigkeit des Luftfahrzeugs (1) wiederum im wesentlichen um die Hälfte reduziert.

6. Luftfahrzeug nach Anspruch 2, **dadurch gekennzeichnet,** daß der Bremsfallschirm (6) eine Mehrzahl von Halteleinen (11) aufweist, deren Länge geringer ist als der Abstand zwischen dem Angriffspunkt (10) des Fallschirm-Systems (5) und dem Höhen/Seitenleitwerk (12) des Luftfahrzeugs (1).

7. Luftfahrzeug nach einem der vorangehenden Ansprüche, **dadurch gekennzeichnet,** daß die Fallschirme (6, 7) des Fallschirm-Systems (5) nacheinander ausbringbar sind.

8. Luftfahrzeug nach einem der vorangehenden Ansprüche, **dadurch gekennzeichnet,** daß das Fallschirm-System (5) manuell auslösbar ist.

9. Luftfahrzeug nach einem der vorangehenden Ansprüche, **dadurch gekennzeichnet,** daß das Fallschirm-System (5) bei Bedingungen automatisch auslösbar ist, die ein kontrolliertes Führen des Luftfahrzeugs nicht zulassen.

10. Luftfahrzeug nach Anspruch 9, **dadurch gekennzeichnet,** daß das Unterschreiten einer vorgegebenen Mindestgeschwindigkeit ein Auslösekriterium bildet.

11. Luftfahrzeug nach Anspruch 9, **dadurch gekennzeichnet,** daß das Ausbleiben vorgegebener Bedienungsbetätigungen des Piloten ein Auslösekriterium bildet.

12. Luftfahrzeug nach Anspruch 9, **dadurch gekennzeichnet,** daß das Ausbringen des Brems- und/oder Tragfallschirms (7) durch ein Zeitkriterium und/oder in Abhängigkeit von Daten, welche Informationen über den aktuellen Flugzustand enthalten, erfolgt.

13. Luftfahrzeug nach einem der vorangehenden Ansprüche, **dadurch gekennzeichnet,** daß die Sitze (14) für die Personen mit Blick in Flugrichtung angeordnet sind.

14. Luftfahrzeug nach einem der vorangehenden Ansprüche, **dadurch gekennzeichnet,** daß das Triebwerk (15) und die Luftschraube (16) in Flugrichtung hinter den Sitzen für die Personen angeordnet sind.

15. Luftfahrzeug nach einem der vorangehenden Ansprüche, **dadurch gekennzeichnet,** daß eine Fernwelle zwischen Triebwerk (15) und im Heckbereich (4) angeordneter Luftschraube (16) vorgesehen ist, welche durch Stauchung verformbar ist.

16. Luftfahrzeug nach einem der vorangehenden Ansprüche, **dadurch gekennzeichnet,** daß mindestens Teile des Rumpfes, des Antriebs oder Tragwerks ab- oder aufsprengbar ausgestaltet sind.

17. Luftfahrzeug nach Anspruch 16, **dadurch gekennzeichnet,** daß die Tanks des Luftfahrzeugs (1) durch einzuleitende Druckluft aufsprengbar ausgebildet sind.

18. Luftfahrzeug nach Anspruch 9, **dadurch gekennzeichnet,** daß für das Ausbringen des Fallschirmsystems (5) ein zusätzliches Antriebsmittel vorgesehen ist.

19. Luftfahrzeug nach Anspruch 18, **dadurch gekennzeichnet,** daß das Antriebsmittel als Treibrakete ausgebildet ist.

20. Luftfahrzeug nach einem der vorangehenden Ansprüche, **dadurch gekennzeichnet,** daß das Fallschirmsystem (5) bei Aufprall des Luftfahrzeugs (1) auf dem Boden von diesem abtrennbar angeordnet ist.

21. Luftfahrzeug nach einem der vorangehenden Ansprüche, **dadurch gekennzeichnet,** daß eine Löschanlage vorgesehen ist, die bei Aufprall des Luftfahrzeugs (1) auf den Boden ausgelöst wird.

22. Luftfahrzeug nach einem der vorangehenden Ansprüche, **dadurch gekennzeichnet,** daß ein Belüftungssystem vorgesehen ist, das die Kabine (13) des Luftfahrzeugs (1) im Zeitbereich des zu erwartenden Aufpralls auf dem Boden mit Überdruck beaufschlagt.

## Claims

1. Aircraft, particularly in the form of a light aircraft for travel or sporting purposes or as a business travel aircraft, having a rescue system which enables the airframe together with those people in it to return to the ground by means of a parachute, wherein a parachute system (5) having at least one parachute (6, 7) is stowed in a first region (2) of the fuselage located in front of the centre of inertia of the aircraft (1) in the direction of flying, characterised in that a second region (3) of the fuselage containing the cabin (13) for accommodating the people and comprising the centre of inertia has great rigidity against deformations occurring on impact with the ground, in that a third region (4) of the fuselage located in the rear portion is constructed so that, by virtue of its deformability, it absorbs a substantial proportion of the kinetic energy released as the airframe hits the ground, slowed down by the parachute, and thus reduces the deceleration of the second region (3) to a harmless level.

2. Aircraft according to claim 1, characterised in that the parachute system (5) consists of a first and second parachute, the first parachute (6) being constructed as a braking parachute.

3. Aircraft according to claim 2, characterised in that the second parachute (7) of the parachute system (5) is constructed as a braking and support parachute.

4. Aircraft according to claim 2, characterised in that the braking parachute (6) reduces the speed of the aircraft (1) relative to the speed of travel by about half.

5. Aircraft according to claim 3, characterised in that the braking and support parachute (7) in turn reduces the speed of the aircraft (1) by about half.

6. Aircraft according to claim 2, characterised in that the braking parachute (6) has a plurality of retaining lines (11) the length of which is less than the distance between the point of attack (10) of the parachute system (5) and the horizontal/vertical tail surfaces (12) of the aircraft (1).

7. Aircraft according to one of the preceding claims, characterised in that the parachutes (6, 7) of the parachute system (5) can be deployed one after the other.

8. Aircraft according to one of the preceding claims, characterised in that the parachute system (5) can be actuated manually.

9. Aircraft according to one of the preceding claims, characterised in that the parachute system (5) can be actuated automatically under conditions which do not allow controlled flying of the aircraft.

10. Aircraft according to claim 9, characterised in that falling below a preset minimum speed constitutes a criterion for actuation.

11. Aircraft according to claim 9, characterised in that the absence of predetermined operating procedures by the pilot constitutes a criterion for actuation.

12. Aircraft according to claim 9, characterised in that the braking and/or support parachute (7) is deployed by means of a time criterion and/or as a function of data which contain information as to the current flying situation.

13. Aircraft according to one of the preceding claims, characterised in that the seats (14) are arranged for the passengers to face in the direction of flying.

14. Aircraft according to one of the preceding claims, characterised in that the engine (15) and the propeller (16) are arranged behind the seats for the passengers, in the direction of flying.

15. Aircraft according to one of the preceding claims, characterised in that an extension shaft is provided between the engine (15) and the propeller (16) arranged in the rear section (4), this extension shaft being deformable by compression.

16. Aircraft according to one of the preceding claims, characterised in that at least parts of the fuselage, drive means or wing assembly are constructed to be capable of being jettisoned or blown off.

17. Aircraft according to claim 16, characterised in that the tanks of the aircraft (1) are constructed to be capable of being blown out by the introduction of compressed air.

18. Aircraft according to claim 9, characterised in that additional drive means are provided for deploying the parachute system (5).

19. Aircraft according to claim 18, characterised in that the drive means are in the form of a drive rocket.

20. Aircraft according to one of the preceding claims, characterised in that the parachute system (5) is arranged so as to be detachable from the aircraft (1) when it hits the ground.

21. Aircraft according to one of the preceding claims, characterised in that a fire extinguisher system is provided which is actuated when the aircraft (1) hits the ground.

22. Aircraft according to one of the preceding claims, characterised in that a ventilation system is provided which applies overpressure to the cabin (13) of the aircraft (1) for the period of time of expected impact with the ground.

## Revendications

1. Avion, en particulier petit avion destiné au voyage ou au sport, ou avion de voyage d'affaires, comportant un système de sauvetage qui permet au moyen d'un parachute le retour sur le sol de la cellule y compris les personnes qui y sont présentes, dans lequel est logé un système à parachute (5) comportant au moins un parachute (6, 7) dans une première région (2) du fuselage située en avant du centre de masse de l'avion (1) en direction de vol,
caractérisé en ce que :
- une seconde région (3) du fuselage contenant la cabine (13) pour recevoir les personnes et comprenant le centre de masse présente une rigidité élevée vis-à-vis des déformations apparaissant lors d'un impact sur le sol,
- en ce qu'une troisième région (4) du fuselage située dans la partie arrière est réalisée de telle sorte qu'elle encaisse grâce à sa déformabilité une partie considérable de l'énergie cinétique libérée lors de la collision freinée par le parachute de la cellule sur le sol, et réduit ainsi la décélération de la seconde région (3) à une valeur non dangereuse.

2. Avion selon la revendication 1, caractérisé en ce que le système à parachute (5) est constitué par un premier et un second parachute, le premier parachute (6) étant réalisé sous forme d'un parachute de freinage.

3. Avion selon la revendication 2, caractérisé en ce que le second parachute (7) du système à parachute (5) est réalisé sous forme d'un parachute de freinage et de support.

4. Avion selon la revendication 2, caractérisé en ce que le parachute de freinage (6) réduit sensiblement de moitié la vitesse de l'avion (1) par rapport à la vitesse de voyage.

5. Avion selon la revendication 3, caractérisé en ce que le parachute de freinage et de support (7) réduit à son tour sensiblement de moitié la vitesse de l'avion (1).

6. Avion selon la revendication 2, caractérisé en ce que le parachute de freinage (6) présente une pluralité de suspentes de retenue (11) dont la longueur est inférieure à la distance entre le point d'accrochage (10) du système à parachute (5) et l'empennage vertical/horizontal (12) de l'avion (1).

7. Avion selon l'une quelconque des revendications précédentes, caractérisé en ce que les parachutes (6, 7) du système à parachute (5) peuvent être sortis l'un après l'autre.

8. Avion selon l'une quelconque des revendications précédentes, caractérisé en ce que le système à parachute (5) peut être déclenché manuellement.

9. Avion selon l'une quelconque des revendications précédentes, caractérisé en ce que le système à parachute (5) peut être déclenché automatiquement dans des conditions qui ne permettent pas un pilotage contrôlé de l'avion.

10. Avion selon la revendication 9, caractérisé en ce que le passage au-dessous d'une vitesse minimum prédéterminée représente un critère de déclenchement.

11. Avion selon la revendication 9, caractérisé en ce que l'absence d'actions de commande prédéterminées effectuées par le pilote représente un critère de déclenchement.

12. Avion selon la revendication 9, caractérisé en ce que la sortie du parachute de freinage et/ou de support (7) s'effectue par un critère temporel et/ou en dépendance de données qui contiennent des informations sur l'état de vol actuel.

13. Avion selon l'une quelconque des revendications précédentes, caractérisé en ce que les sièges (14) pour les personnes sont agencés avec regard en direction de vol.

14. Avion selon l'une quelconque des revendications précédentes, caractérisé en ce que le moteur (15) et l'hélice (16) sont agencés en direction de vol derrière les sièges pour les personnes.

15. Avion selon l'une quelconque des revendications précédentes, caractérisé en ce qu'il est prévu un arbre de transmission entre le moteur (15) et l'hélice (16) agencée dans la région arrière (4), qui peut être déformé par refoulement.

16. Avion selon l'une quelconque des revendications précédentes, caractérisé en ce que des parties au moins du fuselage, de l'entraînement ou du système porteur sont réalisées de manière à pouvoir être éclatées ou détachées par explosion.

17. Avion selon la revendication 16, caractérisé en ce que les réservoirs de l'avion (1) sont réalisés de manière à pouvoir éclater par introduction d'air comprimé.

18. Avion selon la revendication 9, caractérisé en ce qu'il est prévu un moyen d'entraînement supplémentaire pour sortir le système à parachute (5).

19. Avion selon la revendication 18, caractérisé en ce que le moyen d'entraînement est réalisé sous forme d'une fusée d'entraînement.

20. Avion selon l'une quelconque des revendications précédentes, caractérisé en ce que le système à parachute (5) est agencé de manière à pouvoir être séparé de l'avion (1) lors de l'impact de celui-ci sur le sol.

21. Avion selon l'une quelconque des revendications précédentes, caractérisé en ce qu'il est prévu une installation d'extinction qui est déclenchée lors de l'impact de l'avion (1) sur le sol.

22. Avion selon l'une quelconque des revendications précédentes, caractérisé en ce qu'il est prévu un système d'aération qui alimente la cabine (13) de l'avion (1) avec une surpression pendant la période attendue de l'impact sur le sol.
